(19) Europäisches Patentamt
European Patent Office
Office européen des brevets

(11) **EP 1 126 730 B1**

(12) **EUROPÄISCHE PATENTSCHRIFT**

(45) Veröffentlichungstag und Bekanntmachung des Hinweises auf die Patenterteilung:
**17.06.2009   Patentblatt 2009/25**

(51) Int Cl.:
**H04Q 1/45** (2006.01)

(21) Anmeldenummer: **00440309.3**

(22) Anmeldetag: **27.11.2000**

(54) **Verfahren zur aufwandsarmen Signal-, Ton- und Phasenwechseldetektion**

Method for phase change detection of a signal/tone

Procédé de détection de changement de phase d'un signal ou d'une tonalité

(84) Benannte Vertragsstaaten:
**AT BE CH CY DE DK ES FI FR GB GR IE IT LI LU MC NL PT SE TR**

(30) Priorität: **03.01.2000   DE 10000008**

(43) Veröffentlichungstag der Anmeldung:
**22.08.2001   Patentblatt 2001/34**

(73) Patentinhaber: **Alcatel Lucent**
**75008 Paris (FR)**

(72) Erfinder: **Gerlach, Christian Georg**
**71254 Ditzingen (DE)**

(74) Vertreter: **Schmidt, Werner Karl et al**
**Alcatel Lucent**
**Intellectual Property & Standards**
**70430 Stuttgart (DE)**

(56) Entgegenhaltungen:
**EP-A- 0 570 097          US-A- 3 937 899**
**US-A- 5 563 942**

• **RAO S S ET AL: "A neural network pre-processor for multi-tone detection and estimation" NEURAL NETWORKS FOR SIGNAL PROCESSING Y1991., PROCEEDINGS OF THE 1991 IEEE WORKSHOP PRINCETON, NJ, USA 30 SEPT.-1 OCT. 1991, NEW YORK, NY, USA,IEEE, US, 30. September 1991 (1991-09-30), Seiten 580-588, XP010048910 ISBN: 0-7803-0118-8**

EP 1 126 730 B1

## EP 1 126 730 B1

**Beschreibung**

Die Erfindung betrifft ein Verfahren nach dem Oberbegriff des Patentanspruchs 1.

Ein derartiges Verfahren ist beispielsweise durch die EP-A-0 570 097 bekannt geworden.

Auf vielen Gebieten der Telekommunikation, zum Beispiel bei Vermittlungsanlagen, wird Inbandsignalisierung mit speziellen Signalen, vor allem Sinustönen, verwendet. Aus einem Gemisch von Sinusfrequenzen, die von Rauschen oder anderen Signalen überlagert sind, muß eine bestimmte Frequenz zuverlässig detektiert werden, und es muß gegebenenfalls auch detektiert werden, ob die Sinusschwingung einen Phasenwechsel enthält oder nicht.

Es ist bekannt, eine Tondetektion durch Bandfilter oder durch Analysieren des Signals im Frequenzbereich durch Berechnen der diskreten FourierTransformierten des Signals bzw. eines Signalblocks zu erhalten. Das Prinzip der bekannten Algorithmen zum Detektieren eines Phasenwechsels besteht darin, die augenblicklichen Werte des ankommenden Tons mit einer Version zu vergleichen, die um ein genaues Vielfaches der Periodendauer verzögert worden ist, wie dies aus EP 0 565 672 B1 oder aus dem Artikel "A Simple Phase-Reversal Tone Disabler' von J. L. Meise und R. J. Ragland im Tagungsband der Konferenz ICASSP 86, Tokyo, Seiten 2619 bis 2622 bekannt ist. Wegen Frequenztoleranzen und starker Störungen durch Rauschen liegt ein kritischer Punkt für den Algorithmus in der Schätzung der richtigen Periodendauer. Die Anzahl von erforderlichen Rechenoperationen ist sehr hoch, so daß die bekannten Algorithmen wegen des hohen Hardware-Aufwands an Recheneinheiten bzw. digitalen Signalprozessoren (DSP), beispielsweise um 2000 Kanäle parallel zwecks Detektion von Tönen und/oder Phasenwechseln zu verarbeiten, ungeeignet sind.

Aus der eingangs genannten EP-A-0 570 097 ist ein Verfahren zum Detektieren von Tönen in Signalen bekannt, wobei jedes Signal zeitlich in Blöcke mit einer vorgegebenen ersten Breite unterteilt wird und in den Blöcken jeweils in Form von Abtastwerten eines im Zeitbereich liegenden Signals für die Weiterverarbeitung zur Verfügung gestellt wird. Danach werden unerwünschte Töne mittels eines Notch-Filters aus den Abtastwerten gefiltert. Die gefilterten Abtastwerte werden dann in einer Schiebe-Einheit zu Blöcken mit einer vorgegebenen zweiten Breite zusammengefasst, die größer als die erste Breite ist. Die geschobenen Abtastwerte werden weiterverarbeitet und Frequenzbereich- und Zeitbereich-Abschätzeinheiten zugeführt, aus deren Ergebnissen dann eine Entscheidungslogik bestimmt, ob ein gültiges DTMF (dual-tone multi-frequency)-Signal detektiert wurde.

Der Erfindung liegt die Aufgabe zugrunde, ein Verfahren anzugeben, das sich mit einem relativ geringen Aufwand ausführen läßt und das daher mit relativ geringen Kosten geeignet ist, eine große Anzahl von Kanälen (z.B. 2000 Kanäle) im Hinblick auf das Auftreten bestimmter Töne und gegebenenfalls Phasenwechsel mit hoher Zuverlässigkeit zu überwachen.

Diese Aufgabe wird gemäß der Erfindung bei einem Verfahren nach dem Oberbegriff des Patentanspruchs 1 durch die Merkmale des kennzeichnenden Teils des Patentanspruchs 1 gelöst.

Erfindungsgemäß wird somit das Signal, in dem bestimmte Informationssignale oder Töne (Frequenzen) detektiert werden sollen, in zeitlich aufeinanderfolgende Blöcke unterteilt, und es wird nur eine Auswahl der Blöcke, die geringer ist als die gesamte Anzahl der Blöcke, untersucht, es wird eine Transformation z. B. Frequenztransformation (Transformation vom Zeitbereich in den Bildbereich) des Signals in den untersuchten Blöcken vorgenommen, um Ergebniswerte zur Entscheidung zu erhalten. Diese werden in einer Ausführungsform eventuell noch kombiniert.

Die Erfindung ist nicht auf die Ton- und Phasenwechseldetektion beschränkt, wird aber im folgenden hauptsächlich im Hinblick auf diese erläutert.

Bei der Erfindung ist von Vorteil, daß es durch die Aufteilung in einzelne Blöcke und die Verarbeitung nur einer Auswahl aus diesen Blöcken möglich ist, die Komplexität unter Vergrößerung der Detektionsverzögerung zu verringern, insbesondere wenn keine strengen Anforderungen an die Detektionsgeschwindigkeit bestehen. Durch die Unterabtastung auf Blockausgangsebene mit möglicher anschließender Verknüpfung entsteht die Möglichkeit Rechenleistung gegen Verzögerungszeit auszutauschen bzw. Rechenleistung besser zu verteilen. Zum Beispiel schreiben gewisse Standards vor, daß Signaltöne spätestens etwa 0,4 Sekunden nach ihrem Beginn erkannt worden sein müssen. Die untersuchten Blöcke des Nachrichtensignals eines einzigen Kanals müssen daher zeitlich nur so dicht aufeinanderfolgen, daß zum Beispiel die soeben genannte Vorschrift eingehalten werden kann. So kann durch die Erfindung ein Austausch Komplexität gegen Detektionsverzögerung je nach den Anforderungen vorgesehen werden.

Es kann der Fall eintreten, daß trotz der Auswertung nur einer Auswahl der Blöcke jeder einzelne Block für sich bereits genügend sicher (das heißt zum Beispiel auch unter Berücksichtigung des Rauschabstands) die Information über das Vorhandensein oder Nichtvorhandensein der speziellen gesuchten Frequenz liefern kann. In anderen Fällen dagegen wäre eine Entscheidung aufgrund der Information, die ein einzelner Block liefert, nicht möglich oder mit einer zu großen Fehlerwahrscheinlichkeit behaftet.

In solchen Fällen ist gemäß einer Ausführungsform der Erfindung vorgesehen, daß Ergebniswerte mehrerer ausgewählter Blöcke durch eine Funktion oder Abbildung (Mapping) kombiniert werden, und das Ergebnis wird ausgewertet, um einen zuverlässigen Entscheidungswert "z" zu gewinnen. Die Abbildung kann je nach Erfordernis beispielsweise linear sein, insbesondere Multiplikationen und Additionen einschließen, sie kann aber auch nichtlinear sein, beispielsweise mit Schwellenwerten oder Grenzwerten arbeiten. Wird beispielsweise gefordert, daß bei drei aufeinander folgenden Blöcken keines der von jedem einzelnen Block gelieferten Signale den Wert "0" haben darf, damit eine positive Entscheidung getroffen wird, so kann dies sehr einfach mittels einer Multiplikation als Abbildungsfunktion erreicht werden. Die dreimalige Lage über einem Schwellenwert kann z. B. mit einer Vergleichsfunktion und einem UND-Gatter als Abbildungsfunktion erreicht werden.

Bei einer Ausführungsform der Erfindung ist die Abbildung so gewählt, daß sie komplexe Werte berücksichtigt. Von Vorteil ist dabei, daß Phasenbeziehungen einfach berücksichtigt oder auch erkannt werden können.

Obwohl die Lösung auch für kontinuierliche Signale realisierbar wäre, geht die bevorzugte Ausführungsform der Erfindung von abgetasteten (zeitdiskreten) Signalen aus.

Grundsätzlich ist es auch möglich, mit dem erfindungsgemäßen Verfahren nicht nur Sinussignale sondern z. B. Rechtecksignale oder beliebige Signalisierungssignale oder Codesequenzen zu detektieren. Die verwendete Transformation muß dabei entsprechend angepaßt werden.

Die Blocklänge muß einerseits so groß sein, daß eine ausreichende Genauigkeit der Signalerkennung gewährleistet ist, andererseits darf sie nicht zu groß sein, um die Verarbeitungszeit (Rechenzeit) nicht unnötig ansteigen zu lassen. Bei den später beschriebenen Ausführungsbeispielen wird davon ausgegangen, daß unter Voraussetzung einer höchsten Frequenz bei Telefon-Sprachübertragung von 4 kHz eine Abtastfrequenz zwecks Gewinnung digitalisierter Signale von 8 kHz verwendet wird, und daß meist als Blocklänge 80 aufeinanderfolgende Abtastwerte verwendet werden; die zeitliche Blocklänge beträgt in dem genannten Beispiel daher 0,01 Sekunden (Blocklänge N = 80 bedeutet, daß 80 aufeinanderfolgende Abtastwerte des Signals für die Berechnung verwendet werden).

Die Abtastung eines analogen Signals kann eigens für die Zwecke der Erfindung vorgenommen werden, oder es wird ein bereits vorhandenes abgetastetes Signal für die Erfindung verwendet.

Die Erfindung wird größtenteils anhand einer Blocklänge von 80 Abtastwerten und einem Blockabstand von 80 Abtastwerten erläutert. Dabei liegt dann, wenn ein einzelner Block noch nicht die für eine eindeutige Entscheidung erforderliche Information liefern kann, beispielsweise frühestens nach dem Auftreten des zweiten verarbeiteten Blocks die erforderliche Information vor, also nach einer Zeit, die insgesamt drei mal 80 Abtastimpulsabständen entspricht. Bei einer anderen Ausführungsform der Erfindung wird die Blocklänge verkleinert, im Ausführungsbeispiel auf 40 halbiert, so daß zwischen zwei auszuwertenden Blöcken lediglich ein 40 Abtastwerte enthaltender Block nicht ausgewertet wird. In diesem Fall kann dann die Entscheidung bereits nach einer drei mal 40 Abtastimpulsabstände umfassenden Zeit getroffen werden.

Die Frequenztransformation kann vorteilhaft eine (insbesondere diskrete) Fourier-Transformation oder einer von deren Spezialfällen (DFT bzw. FFT) sein. Es sind aber auch andere Transformationen für die Erfindung anwendbar, die eine eindeutige Umsetzung aus dem Zeitbereich in einen Frequenzbereich ermöglichen.

Zum Suchen nach bestimmten Tönen, also nach bestimmten Sinusfrequenzen, wird vorteilhaft eine frequenzselektive Transformation eingesetzt, die auf den jeweils gesuchten Ton abgestimmt wird.

Bevorzugt ist eine Ausführungsform der Erfindung, bei der die digitale Fouriertransformation durch einen Goertzel-Algorithmus ausgeführt wird. Der Goertzel-Algorithmus ist in A. V. Oppenheim und R. W. Schafer, "Discrete-Time Signal Processing", Englewood Cliffs, NJ: Prenticehall, Inc., 1989, ab Seite 585 beschrieben. Der Goertzel-Algorithmus ist derzeit als das effektivste Verfahren zum Berechnen eines DFT-Werts (DFT = Diskrete Fouriertransformation) einer Sequenz mit finiter Dauer von der Länge N bei einer Abtastperiode von T bekannt. Die DFT Frequenzen sind dabei die Frequenzen $f_0 = k/NT$ mit k = 0, 1, ...., N-1 .

Die Erfindung hat erkannt, daß der Goertzel-Algorithmus für den Zweck des Nachweises der Existenz von Tönen in einem Signal für beliebige Frequenzen eingesetzt werden kann, und auf beliebige Frequenzen abgestimmt werden kann. Gemäß einer Ausführungsform der Erfindung wird der Goertzel-Algorithmus auf die augenblicklich gesuchte Frequenz abgestimmt. Der Vorteil liegt in der großen Geschwindigkeit des Algorithmus bei geringem Rechenaufwand.

Zur Ermittlung von Phasenwechseln wird vorteilhaft die Phaseninformation des komplexen Ausgangssignals der Frequenztransformation ausgenutzt, vorzugsweise bei dem Verfahren, das den Goertzel-Algorithmus verwendet, die Phaseninformation des durch den Goertzel-Algorithmus erzeugten Signals.

Weitere Vorteile der Erfindung bestehen darin, daß sie leicht realisierbar ist. Es wird eine starke Verringerung des Rechenaufwands mindestens um den Faktor 2 und eine Erhöhung der Zuverlässigkeit im Vergleich zum Stand der Technik erreicht.

Es kann mit einer einzigen Einrichtung zur Ausführung des Verfahrens eine Mehrzahl von Nachrichten-Kanälen untersucht werden, wobei zweckmäßig die genannte Einrichtung jeweils einen Block aus jedem der Kanäle zeitlich aufeinanderfolgend untersucht und nach der Untersuchung des Blocks des letzten auf diese Weise untersuchten Kanals wieder beim ersten Kanal beginnt und somit dort den zweiten Block des ersten Kanals untersucht, wobei dieser Block von dem ersten untersuchten Block des ersten Kanals einen mehr oder weniger großen Zeitabstand aufweist. Auf diese Weise kann eine einzige Einrichtung zum Beispiel mit einem einzigen Signalprozessor eine Mehrzahl von Nachrichtenkanälen, z.B. zwei, auf das Auftreten von Signaltönen untersuchen.

Bei Ausführungsformen der Erfindung wird eine Variation in Abhängigkeit vom Rauschpegel vorgenommen, derart, daß die Zuverlässigkeit der Erkennung auch bei stark steigendem Rauschpegel gleich bleibt, wenn auch unter Anwendung einer längeren Verarbeitungsdauer dadurch, daß bei einer ersten Ausführungsform bei steigendem Rauschpegel die Blocklänge vergrößert wird, und bei einer zweiten Ausführungsform dadurch, daß die Anzahl von Blöcken, die bis zum Treffen einer Entscheidung verarbeitet werden, vergrößert wird.

Anwendungsmöglichkeiten für das erfindungsgemäße Verfahren liegen beispielsweise bei der Signalisierung für Echounterdrücker und Echokompensatoren in Vermittlungseinrichtungen, die in bestimmten Fällen abzuschalten sind. Für die Signalisierung für Echounterdrücker wird gemäß einer bekannten Vorschrift ein Ton von 2100 Hz ohne Phasenwechsel als Abschaltton verwendet. Für die Abschaltung von Echokompensatoren wird die gleiche Frequenz verwendet, allerdings mit Phasenwechsel. Weitere Frequenzen, die mit dem erfindungsgemäßen Verfahren detektiert werden können, sind insbesondere die bei der Tonwahl verwendeten Wähltöne.

Die Erfindung wird nun erläutert, dabei ergeben sich weitere Merkmale und Vorteile der Erfindung aus der nachfolgenden Beschreibung von Ausführungsbeispielen der Erfindung anhand der Zeichnung, die erfindungswesentliche Einzelheiten zeigt, und aus den Ansprüchen. Die einzelnen Merkmale können je einzeln für sich oder zu mehreren bei einer Ausführungsform der Erfindung verwirklicht sein. Es zeigen

Fig. 1 ein abgetastetes Kanalsignal, beim dem ein Phasenwechsel erkennbar ist,

Fig. 2 eine schematische Darstellung einer Detektoranordnung,

Fig. 3 die Darstellung der Lage von durch das Verfahren gemäß einer Ausführungsform ausgewerteten Blöcken mit einer Blocklänge N = 80 eines einzigen Kanals,

Fig. 4 die Darstellung der Lage von durch das Verfahren nach einer anderen Ausführungsform ausgewerteten Blöcken mit einer Blocklänge 40 eines einzigen Kanals,

Fig. 5 eine schematische Darstellung der Umwandlung von Abtastwerten eines Blocks mittels einer Transformation zur Erzeugung eines Ausgangswerts für einen ausgewerteten Block der Länge N,

Fig. 6 die Darstellung eines Funktionsschemas der Berechnung nach dem Goertzel-Algorithmus für eine Frequenz $f_0$,

Fig. 7 eine schematische Darstellung der Bildung eines Ergebniswerts mittels einer Abbildung,

Fig. 8 die Darstellung der Lage von durch das Verfahren gemäß einer anderen Ausführungsform ausgewerteten Blöcken mit einer Blocklänge N = 80 eines einzigen Kanals,

Fig. 9 eine schematische Blockdarstellung einer Vorrichtung zur Ausführung des erfindungsgemäßen Verfahrens.

Die Detektion von Sinustönen im Rauschen ist eine allgemeine Aufgabe der Signalverarbeitung. Für Datendienste in Telefonnetzen, insbesondere für Signalisierung im Sprachband, werden Sinustöne sehr oft verwendet. Dies erfolgt beispielsweise

beim Zweiton-Multifrequenz-DTMF-Signalisierungssystem, wie es für den Wählvorgang benutzt wird,

bei der Signalisierung für Vermittlungssysteme oder Signalisierungssystem No. 5 usw. ITU Q. 141,

und insbesondere bei der Signalisierung für Echounterdrücker und Echokompensatoren, wie in G. 164, G.165 spezifiziert ist.

Es müssen z. B. Sinuswellen von spezifischen Frequenzen detektiert werden, während andere Frequenzen ignoriert werden müssen. Im unten angegebenen ausführlichen Beispiel werden außerdem Phasenwechsel in den Sinuswellen für Signalisierungszwecke verwendet.

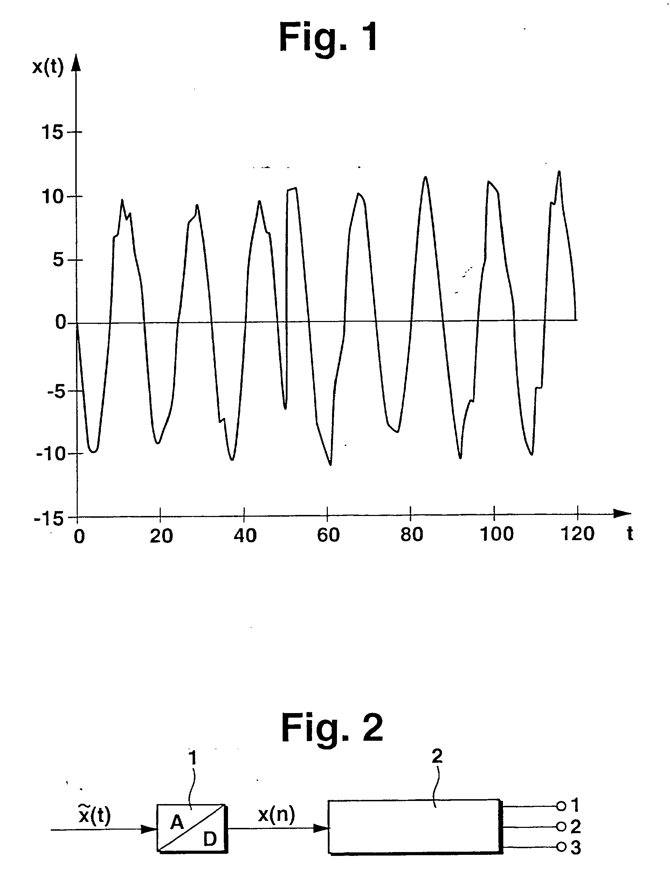

Ein Beispiel für ein zu detektierendes Signal eines einzelnen Kanals ist in Fig. 1 gezeigt. Die Zeitachse zeigt Abtastwerte, d. h. 1/8 Millisekunden an. Das gezeigte Signal hat eine Frequenz von 500 Hz mit Toleranzabweichungen. Es weist einen Phasensprung mit einem Wert von 180˚ (= π) auf.

Im Blockschaltbild der Fig. 2 ist das Signal eines einzelnen Kommunikationssignals durch $\widetilde{x}(t)$ repräsentiert. Obwohl die Erfindung in analoger Form realisiert werden kann, wird sie beim bevorzugten Ausführungsbeispiel in digitaler Form realisiert. So wird das (in Fig. 2 analoge) Tiefpaßsignal (im Beispiel 4 kHz) in geeigneter Weise mit der Abtastzeit T abgetastet und durch einen AD-Wandler 1 in digitale Form umgewandelt. Dies führt zu $x(n) = \tilde{x}(nT)$, das weiterverarbeitet wird. Das beispielhaft in Fig. 1 gezeigte Signal kann dargestellt werden durch

$$x(n) = r(n) + A \cdot \cos(2\pi \bar{f} Tn + \theta(n)).$$

Hier kann die Amplitude A Null sein oder gleich $A_0$ sein und der Phasenterm $\theta(n)$ kann konstant sein oder gleich $\pi u(n - N_c)$ sein, wobei $u(n)$ die Werte 0 oder 1 annehmen kann und die Einheitssprungfunktion darstellt. Das in $x(n)$ vorhandene Rauschen wird durch das Signal $r(n)$ bezeichnet.

Der Detektor 2 (Fig. 2) hat nun unter drei möglichen Ergebnissen zu entscheiden:

1. Es ist kein Ton vorhanden (A = 0);
2. Es ist ein einfacher Ton der spezifizierten Frequenz vorhanden;
3. Es ist ein Ton der spezifizierten Frequenz vorhanden, der einen Phasenschritt von $\pi$ (Phasenumkehr, wie in Fig. 1 gezeigt) aufweist.

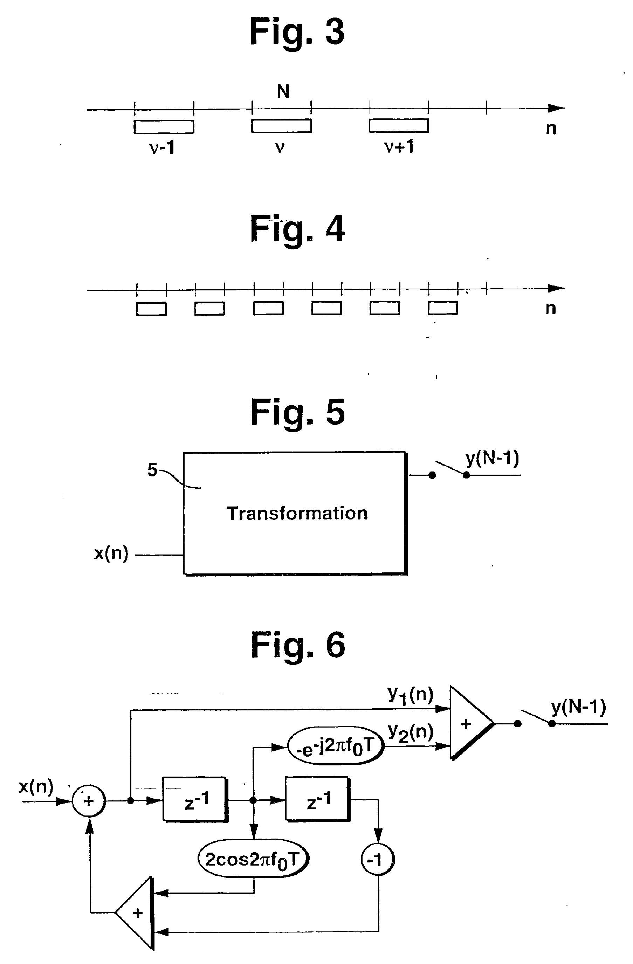

Der Detektor 2 wertet nicht alle Blöcke eines Kanals aus, sondern nur eine Auswahl von diesen, im Beispiel jeden zweiten Block mit einer Blocklänge von 80, wie in Fig. 3 gezeigt ist. Bei einem unten beschriebenen anderen Beispiel haben die Blöcke eine Blocklänge 40, wie in Fig. 4 gezeigt ist.

Grundsätzlich muß die Anzahl der ausgelassenen Blöcke nicht konstant sein, sondern kann auch variieren. Weiter muß der Blockabstand nicht der Blocklänge entsprechen sondern kann jeden beliebigen Wert annehmen und auch variieren.

Anhand Fig. 5 wird erläutert, daß zu dem Detektor, damit er seine Aufgabe ausführen kann, die Funktion oder der Verfahrensschritt einer Transformation 5 gehört. Die Transformation bewirkt eine Umsetzung der Abtastsignale eines Blocks in den Frequenzbereich. Erst nach der Bearbeitung des ganzen Blocks gibt die Transformation einen oder mehrere Ausgangswerte aus, was durch einen Abtaster rechts oben in Fig. 5 symbolisiert ist.

Bei einem bevorzugten Ausführungsbeispiel wird die Funktion der Transformation durch Ausführen von Berechnungen nach dem Goertzel-Algorithmus ausgeführt. Der Goertzel-Algorithmus kann für die Erfindung für jede beliebige Frequenz $f_0$ verwendet werden und ist in Fig. 6 dargestellt, wie er für die Erfindung verwendet wird.

Fig. 6 zeigt eine Funktionsdarstellung der mathematischen Zusammenhänge; die tatsächliche Berechnung kann in anderer Weise erfolgen und ist im Beispiel zur Ausführung durch einen digitalen Computer vorgesehen, der unter Verwendung von DSPs für die schnelle Ausführung von Additionen und Multiplikationen aufgebaut ist. In Fig. 6 stellen die Ovale mit eingezeichneten Werten eine Multiplikation mit dem jeweiligen Wert dar, die Elemente $z^{-1}$ sind Verzögerungselemente (Verzögerung um 1 Abtastperiode), die Dreiecke sind Addierer und der Kreis mit eingezeichnetem Pluszeichen ist ein Addierer.

Wie aus Fig. 6 ersichtlich ist, gelangt zu Beginn des Rechenvorgangs ein Eingangswert x(n) zu einem ersten Verzögerungselement, von dort zu einem zweiten Verzögerungselement und wird von dessen Ausgang nach der Multiplikation mit -1 mit einem anderen Wert addiert, der sich aus dem um eine einzige Verzögerungszeit verzögerten Ausgangssignal des Summierers, mit dem Faktor $2\cos 2\pi f_0 T$ multipliziert, ergibt. Dieses Ergebnis wird im Addierer anschließend zum Eingangssignal addiert und ist damit wieder Eingangswert für die Verzögerungskette. Dieser soeben beschriebene Teil der Fig. 6 ist ein IIR-Filter (Infinite Impulse Response Filter). Somit werden die Eingangswerte *x(0)*, ..., *x(N-1)* einer nach dem anderen verarbeitet, was ungefähr N reelle Multiplikationen erfordert. Unter Verwendung der Filterzustände wird der gewünschte Ausgangswert *y(N-1)* nur im letzten Schritt unter Verwendung von zwei reellen Multiplikationen berechnet. Dies wird durch den Abtaster (rechts oben) symbolisiert. Der erhaltene Wert *y(N-1)* ist dann ein komplexer Wert (besteht also aus zwei Werten). Die zuletzt genannten Multiplikationen verwenden den aus der Formel der Fouriertransformation bekannten Exponentialfaktor $e^{-j2\pi f_0 T}$. Die Multiplikation mit diesem Faktor erfolgt zum Einsparen von Rechenzeit nur einmal pro Block.

Hinsichtlich der Frequenzselektivität oder Auflösung wird eine Verbesserung erzielt, wenn das Eingangssignal mit einer Fensterfunktion $w(n)$ multipliziert wird, was $x(n) \cdot w(n)$ ergibt. Die Fensterfunktion kann anstatt einer Rechteckfunktion eine Funktion sein (z. B. Hammingfenster), die beispielsweise zu den seitlichen Rändern hin einen Amplitudenabfall erzwingt.

Im Beispiel wird eine Blockeinteilung in Blöcke der Länge N wie in Fig. 3 gezeigt verwendet. Es werden die dargestellten Blöcke ν-1, ν, ν+1 und so weiter verarbeitet, während die dazwischen liegenden Blöcke dieses einen Nachrichtenkanals übersprungen werden. Bei der hier gezeigten Ausführungsform des Verfahrens hat die zur Ausführung des Verfahrens vorgesehene Hardware z. B. Zeit, noch bei einem weiteren Nachrichtenkanal jeweils in den Zeitabschnitten, die den Lücken zwischen den Blöcken der Fig. 3 entsprechen, Blöcke zu verarbeiten.

Bei der Blockverarbeitung wird die Kurzzeitleistung gemessen, um die erhaltenen Werte zu normieren, damit man unabhängig von dem jeweiligen spezifischen Pegel ist. In jedem Block ν wird eine Berechnung gemäß dem Goertzel-Algorithmus ausgeführt, die auf die gesuchte Frequenz $f_0$ abgestimmt ist, um den komplexen Wert $y_\nu(N\text{-}1)$ abzuleiten. Die Fensterfunktion $w(n)$, die verwendet wird, kann so bemessen sein, daß sie die gewünschten Frequenzcharakteristiken erfüllt (zum Beispiel wie in G. 164, G. 165 gefordert).

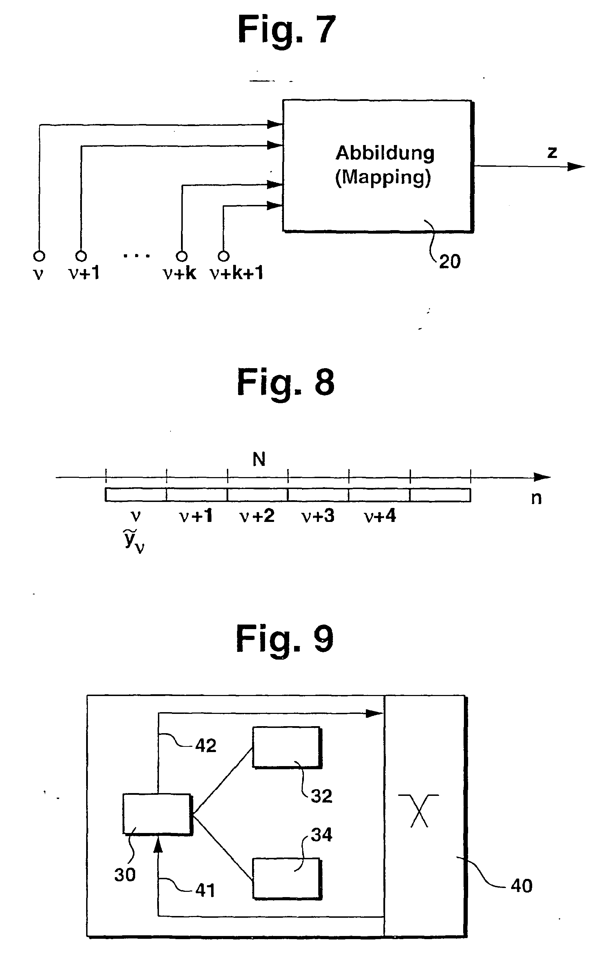

Schließlich ist besonders wichtig, daß die Ausgangssignale $y(N\text{-}1)$ ( siehe Fig. 5), die sich aus der Verarbeitung der untersuchten Blöcke der Fig. 3 ergeben, kombiniert werden, wie dies in Fig. 7 gezeigt ist. Das heißt, die Werte werden einer Abbildung (Mapping) 20 zu einem Entscheidungswert z unterzogen, der das gewünschte Endergebnis einfach darstellt.

Unter Verwendung dieser gezeigten Strukturen und indem man in diesem Beispiel durch die Abbildung 20 die Summe der komplexen Werte $y_{\nu\text{-}1}(N\text{-}1) + y_\nu(N\text{-}1) = z$ als Entscheidungsvariable bildet, kann das Verfahren dazu verwendet werden, die Frequenzselektivität zu vergrößern.

Bei einer anderen Ausführungsform erfolgt die implementierte Realisierung der Kombination wie folgt: Es wird geprüft, ob die normierte Größe $y_\nu(N\text{-}1)/\sqrt{P_\nu}$ mindestens dreimal größer ist als ein bestimmter Schwellenwert, um zu entscheiden, ob ein Sinussignal vorhanden ist.

Wenn man die durchschnittliche Anzahl von Operationen des Detektors betrachtet, ist der Beitrag aus dem Kombinieren der Filterausgangssignale nur gering. Wenn nur jeder *m-th* Block verarbeitet wird, um die Filterausgangssignale nach Goertzel zu berechnen, kann nun die Anzahl von Berechnungen, die zum Kombinieren der Filterausgangssignale verwendet werden, durch $m \cdot N$ dividiert werden, um den Durchschnittswert zu erhalten. Wegen dieser "Unterabtastung" ("Subsampling"), das heißt wegen der Nichtverarbeitung bestimmter Blöcke, tragen sie nur zu einem kleinen Maß zur durchschnittlichen Komplexität bei.

Im folgenden wird eine Lösung für das Problem der Erkennung der Phasenumkehr unter Verwendung der oben gezeigten Struktur beschrieben. Wenn

$$x(n) = A \cdot \cos(2\pi \, \bar{f} \, Tn + \theta)$$

und man zusätzlich annimmt, daß das Spektrum der Fensterfunktion $W(e^{j2\pi fT})$ für $f = 2f_o$ genügend abgeklungen ist, so ergibt sich, daß

$$y(N-1) \approx \frac{A}{2} e^{j2\pi f_0 T(N-1)} e^{j\theta} \cdot W(e^{j2\pi(f_0 - \bar{f})T})$$

Dies ist ein komplexer Wert, der einen großen Betrag für $\bar{f}=f_0$ hat und kleiner wird, falls die aktuelle Frequenz $\bar{f}$ von $f_0$ abweicht. Der Faktor $e^{j2\pi f_0 T(N-1)}$ ist im voraus bekannt. Nun wird erfindungsgemäß vorgesehen, den komplexen Wert $y(N\text{-}1)$ zu verwenden, um eine Phasenmessung der Cosinusfunktion durchzuführen, das heißt um $\theta$ abzuleiten.

Weil eine Zeitverschiebung von einem gemessenen Block zu einem anderen gemessenen Block besteht, übersetzt sich die Zeitverschiebung in einen Phasendrehfaktor $e^{j2\pi \bar{f} T \cdot N}$, wenn man von einem Block zum unmittelbar folgenden weitergeht und kein Rauschen vorhanden ist. Dieser Phasenfaktor könnte kompensiert werden, wenn die Frequenz des gesendeten Tons $\bar{f}$ genau die Gleichung $\bar{f}=f_0$ erfüllen würde. Da aber eine Frequenztoleranz besteht (von beispielsweise 1%), besteht ein unbekannter Phasenanstieg oder Phasenabfall von einem Messungszeitpunkt zum nächsten Messungszeitpunkt. Unter Verwendung mehrerer Messungen kann der lineare Phasenanstieg berechnet werden und bei der Messung kompensiert werden. Danach kann die Phasenmessung verwendet werden, um einen Phasenschritt sehr zuverlässig festzustellen.

Als spezielle Lösung ist bei einem Ausführungsbeispiel folgendes Verfahren vorgesehen. Die drei (gegebenenfalls normierten) Ausgangssignale von Blöcken ν, ν + 2 und ν + 4, wie in Fig. 8 dargestellt, die im Beispiel einen gegenseitigen Abstand von jeweils einem Block haben, werden in einem Produkt kombiniert. (Im Gegensatz zu Fig. 3 werden die Blöcke anders numeriert.) Somit ergibt

$$\tilde{y}_\nu(N\text{-}1) \; \tilde{y}^*_{\nu+2}(N\text{-}1) \; \tilde{y}^*_{\nu+2}(N\text{-}1) \; \tilde{y}_{\nu+4}(N\text{-}1) = z$$

die Entscheidungsvariable z, wobei $y^*$ die konjugiert komplexe Größe bezeichnet. Da diese Kombination nur Multiplikationen verwendet, kann sie vorteilhaft durch einen DSP realisiert werden. In der Tat werden nur 3 komplexe Multiplikationen verwendet was 12 reellen entspricht. Wie man durch Einsetzen eines komplexen Phasenfaktors in die Gleichung sehen kann, ist der Entscheidungswert unabhängig von der ursprünglichen Phase und unabhängig von einer linearen Phasenänderung. Wenn kein Phasensprung oder Phasenschritt vorhanden ist, und kein Rauschen vorhanden ist, würde das Ergebnis z rein reell sein. Wenn sich die Phase spätestens im Block $\nu + 4$ schon um $\varphi$ geändert hat, ist die Entscheidungsvariable z proportional zu $e^{j\varphi}$ und daher zeigt dies den Phasenwechsel, wie gewünscht. Diese Formel führt in einfacher Weise das in Patentanspruch 8 beschriebene Verfahren aus.

Wenn ein Phasenwechsel nicht am Rand, sondern innerhalb eines Blocks, im Beispiel $\nu + 4$ auftritt, ist der Betrag der Amplitude$|\tilde{y}_{v+4}(N-1).|$ nicht so hoch wie normalerweise, außerdem liegt die Phase von z irgendwo zwischen 0 und $\varphi$. Dies reicht nicht aus, um zu einem Phasenwert oberhalb eines Schwellenwerts zu führen. Zum nächsten Zeitpunkt, wenn die nächste Entscheidung getroffen werden muß, würde der Block mit der Phasenänderung als $\tilde{y}_{v+3}(N-1)$ gemessen werden und wird somit nicht bei der Ermittlung von z herangezogen. Aber bei $\tilde{y}_{v+4}(N-1)$ wird die Phasenänderung deutlich wiedergespiegelt, und z zeigt an, daß eine Phasenänderung, zum Beispiel eine Phasenumkehrung stattgefunden hat.

Aus der Informationstheorie ergibt sich, daß man ausreichend viele durch Rauschen gestörte Abtastwerte verarbeiten muß, bevor man zu einer zuverlässigen Entscheidung kommt. Somit ist zur Zeit praktisch keine andere Lösung vorstellbar, die so wenig Speicherplatz und Rechenkomplexität erfordert.

Bei einem speziellen Ausführungsbeispiel beträgt $m = 1$ und die Blocklänge beträgt nur $N = 40$. Es wurde als Fensterfunktion eine spezielle für G.165 entworfene Funktion mit der Länge 40 verwendet. Das Signal-Rausch-Verhältnis (SNR) war nur 5 dB, was der Minimalwert für G.165 ist. Eine Simulation mit 1 Million Versuchen zeigte folgendes: Falschzuordnungen von "Kein Ton" oder "Einfacher Ton" auf ein anderes Ergebnis wurden nicht festgestellt; ein einfacher Ton mit Phasenumkehrung wurde nur mit einer Häufigkeit von $4 \cdot 10^{-5}$ nicht erkannt. Das Verfahren ist daher sehr zuverlässig.

Das Verfahren gemäß der Erfindung kann bei jeder Frequenz verwendet werden. Als Verallgemeinerung kann es bezüglich der Frequenz selbstanpassend sein. Zu der bereits' angesprochenen adaptiven Verarbeitung kann vorteilhaft zunächst eine Prüfung auf zahlreiche Frequenzen Block für Block unter Verwendung einer kurzen Blocklänge und eines nicht sehr hohen Schwellenwerts verwendet werden. Wenn die Wahrscheinlichkeit für das Vorhandensein einer zu prüfenden Frequenz besteht, kann das Verfahren diese Frequenz weiter prüfen, bis Gewißheit im Sinn einer sequentiellen Entscheidung erreicht ist. Anderenfalls fährt das Verfahren fort, alle Frequenzen abzutasten. Somit kann auch bei diesem Verfahren Komplexität gegen Entscheidungszeit ausgetauscht werden.

Das Verfahren ist bei Ausführungsformen der Erfindung in Abhängigkeit vom Signal/Rausch-Verhältnis selbstanpassend. Wenn das Sinussignal gesendet wird und die Größe $|y_v(N-1)|$ eine hohe Varianz von einem gemessenen Block zu dem nächsten gemessenen Block zeigt, wird die Fensterlänge vergrößert. Als Alternative werden mehr Werte bei einer Kompensationsberechnung verwendet. Auf diese Weise wird bewirkt, daß der Algorithmus mit konstanter Fehlerrate bei unterschiedlichen Signal/Rausch-Verhältnissen arbeitet, was ein wichtiger Vorteil gegenüber anderen Algorithmen ist.

Die in Fig. 9 gezeigte Anordnung weist eine Steuerung 30, eine Speichereinrichtung 32 und eine Recheneinrichtung 34 auf, die den Goertzel-Algorithmus ausführen kann. In der Speichereinrichtung 32 sind mindestens die Werte der festzustellenden Frequenzen bzw. Kenngrößen gespeichert, und die Steuerung 30 veranlaßt, daß diese Werte nacheinander der Recheneinrichtung 34 z.B. als Variable $f_0$ zum Ausführen des erfindungsgemäßen Verfahrens zugeführt werden. Die Anordnung ist bei einer Vermittlungsstelle 40 vorgesehen, um Wähltonsignale, Echokompensations-Abschaltsignale und bei Bedarf andere Sinustonsignale zu identifizieren. Von der Vermittlungsstelle 40 werden die zu analysierenden Signale der Steuerung 30 über eine Leitung 41 zugeführt. Die Steuerung 30 veranlaßt die Detektion durch die Recheneinrichtung 34, und die Ergebnisse werden über eine Leitung 42 der Vermittlungsstelle 40 zugeführt.

Das Merkmal der Abbildung (Mapping) wird als eigenständige Erfindung insofern angesehen, daß es nicht darauf ankommt, ob bei der Detektion Blöcke unberücksichtigt bleiben oder nicht.

**Patentansprüche**

**1.** Verfahren zum Detektieren eines Informationssignals, Tons und/oder eines Phasenwechsels eines Tons in einem oder mehreren Signalen (x(n)), die unter anderem dieses Informationssignal oder diesen Ton enthalten, wobei jedes Signal (x(n)) zeitlich in Blöcke unterteilt wird und in den Blöcken jeweils in Form von Abtastwerten eines im Zeitbereich liegenden Signals für die Weiterverarbeitung zur Verfügung gestellt wird,
**dadurch gekennzeichnet,**
**dass** aus den Blöcken nur eine Auswahl, die geringer als die gesamte Anzahl der Blöcke ist, zur Detektion weiterverarbeitet wird, wogegen die nicht zur Auswahl gehörenden Blöcke nicht weiterverarbeitet werden,
**dass** die ausgewählten Blöcke (v-1, v, v+1) einer Transformation (5) vom Zeitbereich in den Frequenzbereich zur Erzeugung mindestens eines Ausgangswerts (y(N-1)) unterzogen werden, und
**dass** mit Hilfe des mindestens einen Ausgangswerts (y(N-1)) der Transformation (5) eine Entscheidung (z) bezüglich der Detektion getroffen wird.

**2.** Verfahren nach Anspruch 1, **dadurch gekennzeichnet, dass** die Ausgangswerte (y(N-1)) der Transformation (5) einer Mehrzahl von ausgewählten Blöcken (v-1, v, v+1) durch eine Funktion oder Abbildung (20) in mindestens ein Ergebnis abgebildet werden, und dass das Ergebnis zur Erzeugung eines Entscheidungswerts (z) verwendet wird.

**3.** Verfahren nach Anspruch 2, **dadurch gekennzeichnet, dass** die Abbildung (20) eine, gewünschtenfalls komplexe, Summenbildung darstellt.

**4.** Verfahren nach Anspruch 2, **dadurch gekennzeichnet, dass** die Abbildung (20) eine gewünschtenfalls komplexe, Produktbildung darstellt.

**5.** Verfahren nach einem der vorhergehenden Ansprüche, **dadurch gekennzeichnet, dass** die Transformation (5) frequenzselektiv ist und auf die Frequenz des augenblicklich zu detektierenden Tons abgestimmt ist oder wird.

**6.** Verfahren nach einem der vorhergehenden Ansprüche, **dadurch gekennzeichnet, dass** eine Fouriertransformation (5) verwendet wird.

**7.** Verfahren nach einem der vorhergehenden Ansprüche, **dadurch gekennzeichnet, dass** eine Fouriertransformation (5) nach Multiplikation des Zeitsignals mit einem Fenster verwendet wird.

**8.** Verfahren nach Anspruch 6 oder 7, **dadurch gekennzeichnet, dass** die Fouriertransformation (5) durch Verwendung eines Goertzel-Algorithmus berechnet wird, wobei dieser auf die Frequenz des jeweils zu detektierenden Tons abgestimmt ist oder wird.

**9.** Verfahren nach einem der vorhergehenden Ansprüche, **dadurch gekennzeichnet, dass** zum Feststellen eines Phasenwechsels aus komplexen Ausgangswerten der Transformation (5) die Phasenlage zu einem ersten und einem um eine definierte Zeitdifferenz späteren Zeitpunkt entsprechend einem ersten und einem späteren Block erfasst wird, dass die Phasendifferenz der Phasenlagen zu den beiden Zeitpunkten mit der Phasendifferenz der Phasenlagen eines um die gleiche Zeitdifferenz im Vergleich zum zweiten Zeitpunkt später liegenden dritten Zeitpunkts gegenüber dem zweiten Zeitpunkt verglichen wird, und dass bei hinreichend genauer Übereinstimmung der beiden Phasendifferenzen auf das Nichtvorhandensein eines Phasenwechsels im Signal (x(n)) und bei hinreichend große Abweichung der beiden Phasendifferenzen auf das Vorhandensein eines Phasenwechsels im Signal (x(n)) entschieden wird.

**10.** Verfahren nach Anspruch 9, **dadurch gekennzeichnet, dass** die Ermittlung der die Phase beschreibenden Komplexzahl mit nur zwölf reellen Multiplikationen durchgeführt wird.

**11.** Verfahren nach Anspruch 9 oder 10, **gekennzeichnet durch** seine Ausführung **durch** Auswertung der Formel:

$$\tilde{y}_v(N-1) \ \tilde{y}^*_{v+2}(N-1) \ \tilde{y}^*_{v+2}(N-1) \ \tilde{y}_{i+4}(N-1) = z.$$

**12.** Verfahren nach einem der vorhergehenden Ansprüche, **dadurch gekennzeichnet, dass** die durch die Anzahl der Abtastwerte eines Blocks gebildete Blocklänge und/oder die Anzahl der für eine Detektion verwendeten Blöcke in Abhängigkeit vom Signal/Rausch-Verhältnis des Signals (x(n)) angepasst wird, derart, dass über einen Bereich von Signal/Rausch-Verhältnissen eine im wesentlichen konstante Fehlerrate der Detektion erreicht wird.

**13.** Verfahren nach einem der vorhergehenden Ansprüche, **dadurch gekennzeichnet, dass** mehrere Kanäle in einer Art Zeitmultiplex mit versetzten auseinanderliegenden Blöcken abgearbeitet werden.

**14.** Vorrichtung zum Detektieren eines Informationssignals, Tons und/oder eines Phasenwechsels eines Tons in einem oder mehreren Signalen (x(n)), das/die unter anderem dieses Informationssignal oder diesen Ton enthält/enthalten, **dadurch gekennzeichnet,**
**dass** die Vorrichtung Einrichtungen (2, 5, 30, 32, 34) zum Ausführen des Verfahrens nach einem der vorhergehenden Ansprüche aufweist.

**15.** Vorrichtung nach Anspruch 14, **gekennzeichnet durch** eine Recheneinrichtung (34), eine Speichereinrichtung (32) und eine Steuereinrichtung (30), die bei Betrieb in der Speichereinrichtung (32) enthaltene Daten bezüglich zu delektierender Töne bzw. Frequenzen der Recheneinrichtung (34) zuführt, die ein Ausgangssignal abgibt, das für das Vorhandensein einer zu detektierenden Frequenz und/oder eines Phasenwechsels charakteristisch ist.

## Claims

**1.** Method for the detection of a data signal, a tone and/or a phase change in a tone in one or more signals (x(n)), which contain, among other things, such data signal or such tone, where each signal (x(n)) is temporally subdivided into blocks and is made available for further processing In the blocks, in each case in the form of scan values of a signal located within the time range,
**characterised in that,**
out of those blocks only a selection that is smaller than the total number of blocks is further processed for detection, whereas the blocks not included in the selection are not further processed,
that the selected blocks (v-1, v, v+1) are subjected to a transformation (5) from the time area into the frequency area for generation of at least one starting value (y(N-1)), and
that using the at least one starting value (y(N-1)) of the transformation (5) a decision (z) is made in regard to detection.

**2.** Method according to Claim 1, **characterized in that** the starting values (y(N-1)) of the transformation (5) of a plurality of selected blocks (v-1, v, v+1) are mapped into at least one solution by means of a function or image (20), and that the solution is used to generate a decision making value (z).

**3.** Method according to Claim 2, **characterized in that** the image (20) represents the generation of a sum, if desired a complex sum.

**4.** Method according to Claim 2, **characterized in that** the image (20) represents the generation of a multiplication product, if desired a complex product.

**5.** Method according to one of the above Claims, **characterized in that** the transformation (5) is frequency selective, and matches or is made to match the frequency of the tone to be detected at the time.

**6.** Method according to one of the above Claims, **characterized in that** a Fourier transformation (5) is used.

**7.** Method according to one of the above Claims, **characterized in that** a Fourier transformation (5) is used after multiplication of the time signal with a window.

**8.** Method according to one of the Claims 6 or 7, **characterized in that** the Fourier transformation (5) is calculated by means of a Goertzel algorithm, where the latter matches or is made to match the frequency of the tone to be detected at the time.

**9.** Method according to one of the above Claims, **characterized in that** in order to determine a phase change from complex starting values of the transformation (5) the phase relationship is recorded at a first and at a second point in time, which occurs later by a defined time difference, corresponding to a first and a second, later block; that the phase difference of the phase relationships is compared to the two points in time with the phase difference of the phase relationships of a third point in time that occurs later by the same time difference in comparison to the second point in time; and that in the event of a sufficiently accurate match of the two phase differences a decision is made as to the absence of a phase change in the signal (x(n)) and in the event of a sufficiently significant deviation of the two phase differences a decision is made as to the presence of a phase change in the signal (x(n)).

**10.** Method according to Claim 9, **characterized in that** the complex number describing the phase is determined by means of only 12 real multiplications.

**11.** Method according to one of Claims 9 or 10, **characterized by** its implementation by determination of the value of the formula:

$$\tilde{y}_v(N-1) \quad \tilde{y}'_{v+2}(N-1) \quad \tilde{y}^*_{v+2}(N-1) \quad \tilde{y}_{v+4}(N-1) = z.$$

**12.** Method according to one of the above Claims, **characterized in that** the block length formed by the number of the scan values of a block and/or the number of the blocks used for a detection is adapted as a function of the signal-to-noise ratio of the signal (x(n)), in a manner such that over a range of signal-to-noise ratios an essentially constant detection error rate is achieved.

**13.** Method according to one of the above Claims, **characterized in that** several channels are processed in a kind of time multiplex with staggered separately positioned blocks.

**14.** Device for the detection of a data signal, a tone and/or a phase change in a tone in one or more signals (x(n)), which contain(s), among other things, such data signal or such tone, **characterized in that**
the device comprises apparatuses (2, 5, 30, 32, 34) for the performance of the method according to one of the above Claims.

**15.** Device according to Claim 14, **characterized by** a calculation device (34), a storage device (32) and a control device (30), which, when in operation, feeds data concerning tones and/or frequencies contained in the storage device (32) to the calculation device (34), which emits a starting signal that is characteristic for the presence of a frequency and/or a phase change to be detected.

**Revendications**

**1.** Procédé de détection d'un signal d'information, d'une tonalité et/ou d'un changement de phase d'une tonalité dans un ou plusieurs signaux (x(n)) qui contiennent, entre autres, ce signal d'information ou cette tonalité, chaque signal (x(n)) étant divisé dans le temps en blocs et un signal se trouvant dans le domaine de temps étant mis à disposition pour traitement ultérieur dans les blocs à chaque fois sous la forme de valeurs échantillonnées,
**caractérisé en ce que**
seule une sélection de blocs, laquelle est inférieure au nombre total de blocs, est soumise au traitement ultérieur en vue de la détection, alors que les blocs ne faisant pas partie de la sélection ne sont pas soumis au traitement ultérieur,
les blocs sélectionnés (v-1, v, v+1) sont soumis à une transformation (5) du domaine du temps en domaine des fréquences en vue de produire au moins une valeur de sortie (y(N-1)), et
une décision (z) relative à la détection est prise à l'aide de l'au moins une valeur de sortie (y(N-1)) de la transformation (5).

**2.** Procédé selon la revendication 1, **caractérisé en ce que** les valeurs de sortie (y(N-1)) de la transformation (5) d'une pluralité de blocs sélectionnés (v-1, v, v+1) sont formées par une fonction ou une représentation (20) dans au moins un résultat et que le résultat est utilisé pour générer une valeur de décision (z).

**3.** Procédé selon la revendication 2, **caractérisé en ce que** la représentation (20) représente une somme au besoin complexe.

**4.** Procédé selon la revendication 2, **caractérisé en ce que** la représentation (20) représente un produit au besoin complexe.

**5.** Procédé selon l'une des revendications précédentes, **caractérisé en ce que** la transformation (5) est sélective en fréquence et qu'elle est ou sera accordée sur la fréquence de la tonalité momentanément à détecter.

**6.** Procédé selon l'une des revendications précédentes, **caractérisé en ce qu'**une transformation de Fourier (5) est utilisée.

**7.** Procédé selon l'une des revendications précédentes, **caractérisé en ce qu'**une transformation de Fourier (5) est utilisée après multiplication du signal de temps avec un créneau.

**8.** Procédé selon la revendication 6 ou 7, **caractérisé en ce que** la transformation de Fourier (5) est calculée en utilisant un algorithme de Goertzel, celui-ci étant ou sera accordé sur la fréquence de la tonalité respective à détecter.

9. Procédé selon l'une des revendications précédentes, **caractérisé en ce que** pour déterminer un changement de phase à partir des valeurs de sortie complexes de la transformation (5), la phase est détectée à un premier instant et à un instant postérieur d'une différence de temps donnée correspondant à un premier bloc et à un bloc postérieur, que la différence entre les phases aux deux instants est comparée à la différence de phase entre la phase d'un troisième instant, postérieur au deuxième instant de la même différence de temps, et la phase du deuxième instant, et que si la concordance des deux différences de phase est suffisamment précise, la décision prise est l'absence d'un changement de phase dans le signal (x(n)) alors que si l'écart entre les deux différences de phase est suffisamment grand, la décision prise est la présence d'un changement de phase dans le signal (x(n)).

10. Procédé selon la revendication 9, **caractérisé en ce que** la détermination du nombre complexe décrivant la phase est effectuée avec douze multiplications réelles seulement.

11. Procédé selon la revendication 9 ou 10, **caractérisé par** son exécution en interprétant la formule :

$$\tilde{y}_v(N-1) \quad \tilde{y'}_{v+2}(N-1) \quad \tilde{y}^*_{v+2}(N-1) \quad \tilde{y}_{v+4}(N-1) = z.$$

12. Procédé selon l'une des revendications précédentes, **caractérisé en ce que** la longueur de bloc formée par le nombre de valeurs échantillonnées d'un bloc et/ou le nombre de blocs utilisés pour une détection est adaptée en fonction du rapport signal/bruit du signal (x(n)) de manière à obtenir un taux d'erreurs de détection sensiblement constant sur une plage de rapports signal/bruit.

13. Procédé selon l'une des revendications précédentes, **caractérisé en ce que** plusieurs canaux sont traités dans une espèce de multiplexage dans le temps avec des blocs distincts espacés.

14. Dispositif de détection d'un signal d'information, d'une tonalité et/ou d'un changement de phase d'une tonalité dans un ou plusieurs signaux (x(n)) qui contiennent, entre autres, ce signal d'information ou cette tonalité, **caractérisé en ce,**
**que** le dispositif présente des équipements (2, 5, 30, 32, 34) pour mettre en oeuvre le procédé selon l'une des revendications précédentes.

15. Dispositif selon la revendication 14, **caractérisé par** un équipement de calcul (34), un équipement de mémorisation (32) et un équipement de commande (30) qui, lors du fonctionnement, achemine les données relatives aux tonalités ou aux fréquences détectées qui se trouvent dans l'équipement de mémorisation (32) à l'équipement de calcul (34), lequel délivre un signal de sortie qui est caractéristique de la présence d'une fréquence et/ou d'un changement de phase à détecter.

# Fig. 1

# Fig. 2

# Fig. 3

# Fig. 4

# Fig. 5

# Fig. 6

# Fig. 7

Abbildung
(Mapping)

z

ν    ν+1    · · ·    ν+k    ν+k+1

20

# Fig. 8

N

n

ν    ν+1    ν+2    ν+3    ν+4

$\widetilde{y}_\nu$

# Fig. 9

42

32

34

30

41

40

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0570097 A

- EP 0565672 B1